# EUROPÄISCHE PATENTSCHRIFT

(11) **EP 2 778 083 B1**
(45) Veröffentlichungstag und Bekanntmachung des Hinweises auf die Patenterteilung: **14.06.2017**
(21) Anmeldenummer: 14150010.8
(22) Anmeldetag: 02.01.2014
(51) Int. Cl.: B65C 9/40, G01B 5/004, G01B 5/14

(54) **Vorrichtung und Verfahren zum Überprüfen der Etikettiergenauigkeit an Behältern**
Device and method for checking the accuracy of labels on containers
Dispositif et procédé de vérification de la précision d'étiquetage sur des récipients

(30) Priorität: 13.03.2013 DE 102013204333
(43) Veröffentlichungstag der Anmeldung: 17.09.2014
(73) Patentinhaber: Krones AG, 93073 Neutraubling (DE)
(72) Erfinder: Gertlowski, Georg, 93073 Neutraubling (DE)
(74) Vertreter: Grünecker Patent- und Rechtsanwälte PartG mbB

(56) Entgegenhaltungen:
- EP-A1- 1 627 816
- WO-A1-93/06431
- DE-A1- 19 703 690
- GB-A- 2 197 478

## Beschreibung

Die Erfindung betrifft ein Verfahren zum Überprüfen der Etikettiergenauigkeit an Behältern, insbesondere Flaschen.

Die Überprüfung der Etikettiergenauigkeit an Behältern ist Bestandteil von Abnahmen bei der Inbetriebnahme von Etikettieranlagen und/oder wird im Rahmen regelmäßiger Qualitätskontrollen der Produktion durchgeführt. Hierzu sind aus der DE 10 2009 035 924 A1 eine Vorrichtung und ein Verfahren zum Überprüfen eines Etiketts auf einem Etikettenträger bekannt. Demnach ist eine Kontrolleinrichtung vorgesehen, mit der ein Ist-Zustand eines auf einen Behälter aufgebrachten Etiketts mit einem Soll-Zustand der Etikettierung verglichen werden kann. Auf dieser Grundlage ist eine Qualitätskontrolle der Etikettierung für die Anlagenabnahme und/oder für einzelne Produktchargen im laufenden Betrieb möglich. Zu diesem Zweck werden beispielsweise mehrere hundert etikettierte Behälter bei normalen Produktionsbedingungen aus dem Produktstrom ausgeschleust und die Lage der Etiketten mit Sollwerten verglichen und/oder die relative Position mehrerer auf den Behältern angebrachter Etiketten zueinander mit entsprechenden Sollwerten verglichen. Qualitätskriterium ist dann üblicherweise ein zulässiger Anteil fehlerhaft etikettierter Behälter.

Problematisch dabei ist, dass sich die Lage der einzelnen Etiketten auf den Behältern oftmals nur vergleichsweise umständlich ermitteln lässt, beispielsweise indem eine seitliche Hälfte der Etiketten wieder vom Behälter abgezogen und deckungsgleich über die andere, noch auf dem Behälter befindliche Hälfte umgeschlagen wird, um auf diese Weise die Lage der vertikalen Mittelachse des Etiketts an der Faltkante vermessen zu können. Dies ist zum Einen umständlich und aufgrund des Umschlagens fehlerbehaftet. Zum Anderen lassen sich nur bestimmte Etikettentypen in geeigneter Weise wieder abziehen und umschlagen, insbesondere Nassleimetiketten. Außerdem müssen bei bekannten Auswerteverfahren für aussagekräftige Ergebnisse vergleichsweise umfangreiche Stichproben aus dem Produktstrom entnommen werden.

Die WO 93/06431 A1 offenbart eine Vorrichtung zum Vermessen von Flaschen oder dergleichen mittels schwenkbarer Stifte, die beim Berühren der zu vermessenden Oberflächen Schalter auslösen, um Schaltimpulse an einen Computer zu übertragen. Die schwenkbaren Stifte sind an je einem horizontal mittels eines Schrittmotors beweglichen Schlitten gelagert. Diese können wiederum gemeinsam mithilfe eines Schrittmotors in vertikaler Richtung linear gehoben bzw. gesenkt werden. Die zu vermessenden Behälter werden auf einem Drehteller fixiert, der ebenso von einem Schrittmotor angetrieben ist.

Die DE 197 03 690 A1 offenbart eine Vorrichtung zum Vermessen von Werkstücken. Eine bevorzugte Ausführungsform umfasst dabei drei linear bewegliche Messarme mit daran ausgebildeten Tastköpfen, die in zueinander orthogonalen Richtungen gegen ein Werkstück gefahren werden können, das auf einem stationären Werkstückaufnehmer festgespannt ist.

Es besteht somit der Bedarf für verbesserte Vorrichtungen und Verfahren zum Überprüfen der Etikettiergenauigkeit an Behältern, mit denen sich wenigstens eines der obigen Probleme beseitigen oder zumindest abmildern lässt.

Die gestellte Aufgabe wird mit einem Verfahren nach Anspruch 1 gelöst. Eine dafür geeignete Vorrichtung umfasst: eine Halterung zum verdrehfesten Halten der Behälter; eine erste Prüfspitze, die sich mit einem ersten seitlich an den Behältern angebrachten Etikett in Kontakt bringen lässt; eine zweite Prüfspitze, die sich mit einem zweiten seitlich an den Behältern angebrachten Etikett in Kontakt bringen lässt; wenigstens eine Lineareinheit zum Verschieben der ersten und zweiten Prüfspitze oder zum Verschieben der Halterung entlang einer senkrecht zur Hauptachse des Behälters verlaufenden Messgeraden; und eine Messeinrichtung zur Positionsbestimmung der Lineareinheit entlang der Messgeraden. Die Lineareinheit umfasst beispielsweise einen geradlinig entlang einer Grundplatte verschiebbaren Schlitten, Tisch oder dergleichen.

In vorteilhafter Weise lassen sich die erste und zweite Prüfspitze dann gezielt mit Aufdruckmerkmalen des ersten und zweiten Etiketts in Kontakt bringen. Die Aufdruckmerkmale liegen vorzugsweise auf der vertikalen Mittelachse des jeweiligen Etiketts oder haben zu dieser einen bekannten seitlichen Abstand. Somit können unterschiedliche Etikettentypen, insbesondere auch schwer von den Behältern ablösbare Selbstklebeetiketten ohne Ablösen der Etiketten vermessen werden.

Mit der wenigstens einen Lineareinheit können der verdrehfest gehaltene Behälter und die Prüfspitzen relativ zueinander entlang einer gemeinsamen Messgeraden verschoben werden. Dies vereinfacht das Messen eines seitlichen Versatzes zwischen dem ersten und dem zweiten Etikett entlang der gemeinsamen Messgeraden. Die Messeinrichtung ist beispielsweise eine entlang der Messgeraden verlaufende Messskala.

Vorzugsweise sind die erste und zweite Prüfspitze sowohl zur Hauptachse des Behälters als auch zur Messgeraden orthogonal ausgerichtet. Die Prüfspitzen lassen sich beispielsweise orthogonal zur Messgeraden anheben/absenken und dann zur Positionierung an den Etiketten in deren Richtung vorschieben oder vorschrauben. Dies vereinfacht insbesondere ein gezieltes Positionieren der ersten und zweiten Prüfspitze an den Aufdruckmerkmalen der jeweiligen Etiketten. Die Messeinrichtung kann beispielsweise in Form einer Skala und eines Messzeigers in die Lineareinheit integriert sein. Ebenso denkbar sind Messschieber oder dergleichen, die dann an definierte Messpunkte der Lineareinheit und/oder der Prüfspitzen angelegt werden.

Die Halterung kann in an sich bekannter Weise zum kraftschlüssigen und/oder formschlüssigen Halten der Behälter ausgebildet sein, um die Behälter gegen ein ungewolltes Verdrehen aus einer Soll-Drehlage für die Überprüfung zu sichern. Die Behälter, insbesondere Flaschen, können sowohl im Wesentlichen rotationssymmetrische Querschnitte ausweisen als auch Formflaschen sein.

Vorzugsweise umfasst die Vorrichtung ferner eine dritte Prüfspitze, die sich mit einem dritten seitlich an den Behältern angebrachten Etikett in Kontakt bringen lässt. Damit lässt sich am verdrehfest gehaltenen Behälter beispielsweise die Lage von Rumpfetiketten, Brustetiketten und Rückenetiketten nacheinander vermessen. Der Versatz zwischen den jeweiligen Etiketten entlang der Messgeraden kann somit schnell und exakt bestimmt werden.

Vorzugsweise sind die zweite und dritte Prüfspitze dann auf entgegensetzten Seiten des Behältern entlang der Messgeraden verschiebbar ausgebildet. Dies ermöglicht einen besonders einfachen Vergleich der Position von Rückenetiketten mit der Position von Rumpfetiketten und/oder Brustetiketten.

Vorzugsweise sind die zweite und dritte Prüfspitze dann auf getrennten Lineareinheiten montiert. Dies vereinfacht eine schnelle und exakte Positionierung der Prüfspitzen und das Ablesen von Messwerten auf jeweils zugeordneten Messskalen.

Vorzugsweise umfasst die Vorrichtung ferner einen justierbaren mechanischen Anschlag für eine an dem Behälter ausgebildete Oberflächenkontur, insbesondere eine Prägung oder Formflaschenkante. Dies ist insbesondere dann von Vorteil, wenn die Ausrichtung der jeweiligen Etiketten bezüglich der Oberflächenkontur als Kriterium für die Überprüfung der Etikettiergenauigkeit verwendet werden soll. Der mechanische Anschlag kann beispielsweise als justierbarer Stift oder dergleichen ausgebildet sein. Ebenso ist es denkbar, dass an dem mechanischen Anschlag eine an die jeweils zu kontaktierende Oberflächenkontur angepasste Kontaktfläche oder Kante ausgebildet ist, beispielsweise als Negativ der Oberflächenkontur.

Vorzugsweise ist die Vorrichtung tragbar ausgebildet. Dies ermöglicht eine flexible Messung bei der Anlagenabnahme und/oder bei der routinemäßigen Qualitätskontrolle von Produktchargen. Beispielsweise können die Behälter der Stichprobe in einem separaten Messlabor oder bei der Installation direkt vor Ort vermessen werden.

Das Verfahren nach Anspruch 1 umfasst die Schritte: a) Halten der Behälter in einer vorgegebenen Drehlage; b) Positionieren einer ersten Prüfspitze an einem ersten Aufdruckmerkmal, das auf einem seitlich an den Behältern angebrachten ersten Etikett vorhanden ist, durch Verschieben der ersten Prüfspitze oder des Behälters entlang einer senkrecht zur Hauptachse des Behälters verlaufenden Messgeraden, und Messen einer zugehörigen ersten Ist-Position entlang der Messgeraden; c) Positionieren einer zweiten Prüfspitze an einem zweiten Aufdruckmerkmal, das auf einem seitlich an den Behältern angebrachten zweiten Etikett vorhanden ist, durch Verschieben der zweiten Prüfspitze oder des Behälters entlang der Messgeraden, und Messen einer zugehörigen zweiten Ist-Position entlang der Messgeraden; und d) Ermitteln eines Positionsversatzes zwischen der ersten und zweiten Ist-Position.

Das erste und zweite Aufdruckmerkmal ist beispielsweise ein charakteristischer Kontrastunterschied auf den jeweiligen Etiketten, insbesondere eines Buchstaben, eines Logos, eines geometrischen Musters oder dergleichen. Vorzugsweise ist das jeweilige Aufdruckmerkmal auf der vertikalen Mittelachse des jeweiligen Etiketts vorhanden oder weist einen bekannten Abstand zu dieser Mittelachse auf. Somit lässt sich der Positionsversatz durch direktes Aufsetzen auf die jeweiligen Aufdruckmerkmale ermitteln. Insbesondere ein Ablösen der Etiketten von den Behältern für die Etikettenkontrolle ist dann entbehrlich.

Vorzugsweise umfasst das Verfahren ferner einen vorangehenden Schritt des Ausrichtens der Behälterdrehlage durch Ansetzen einer an den Behältern vorhandenen Oberflächenkontur, insbesondere einer Prägung oder Formflaschenkante, an einem mechanischen Anschlag. Der mechanische Anschlag wird beispielsweise vor der Vermessung einer Produktcharge an die jeweiligen Behälter angepasst, so dass der mechanische Anschlag für die nachfolgende Vermessung gleichartig etikettierter Behälter in einer unveränderten Position als gemeinsamer Ausgangspunkt für die Ermittlung des Positionsversatzes dient.

Vorzugsweise ist das erste Etikett ein Rumpfetikett und das zweite Etikett ein Brustetikett oder ein Rückenetikett. Dadurch lässt sich ein für die Qualitätskontrolle besonders aussagekräftiger Versatz zwischen dem Rumpfetikett und dem Brustetikett oder zwischen dem Rumpfetikett und dem Rückenetikett ermitteln.

Bei einer besonders günstigen Ausgestaltung des Verfahrens wird ferner eine dritte Prüfspitze an einem dritten Aufdruckmerkmal, das auf einem seitlich an den Behältern angebrachten dritten Etikett vorhanden ist, durch Verschieben der dritten Prüfspitze oder des Behälters entlang der Messgeraden positioniert. Es wird ferner eine zugehörige dritte Ist-Position entlang der Messgeraden gemessen und ein Positionsversatz zwischen der dritten Ist-Position und der ersten und/oder zweiten Ist-Position ermittelt. Damit lassen sich die bei handelsüblichen Behältern, wie beispielsweise Flaschen, am häufigsten verwendeten Etikettenpositionen relativ zueinander vermessen und mit einem Sollwert des jeweils zwischen den einzelnen Etiketten zulässigen Versatzes vergleichen.

Vorzugsweise sind das zweite und dritte Etikett auf einander entgegen gesetzten Seiten des Behälters angebracht. Dadurch lassen sich auch komplexe Etikettierprozesse beurteilen.

Vorzugsweise wird der jeweilige Positionsversatz für eine Stichprobe von wenigstens 30, insbesondere wenigstens 100 gleichartig etikettierten Behälter statistisch auf der Grundlage einer Gaußschen Normalverteilung der Ergebnisse ausgewertet. Insbesondere wird die aus der Stichprobe ermittelte Standardabweichung (σ₁) mit einem Sollwert verglichen. Mit Hilfe der Gaußschen Normalverteilung lässt sich die Anzahl der für eine aussagekräftige Qualitätskontrolle benötigten Stichprobengröße gegenüber einem Vergleich basierend auf prozentualen Fehlerquoten reduzieren.

Vorzugsweise wird der jeweilige Positionsversatz unter Normalproduktionsbedingungen innerhalb einer Produktcharge gemessen. In diesem Fall sind Fehler aufgrund eines Wechsels von Produktionsmitteln vernachlässigbar, so dass die benötigte Stichprobengröße weiter reduziert werden kann.

Die gestellte Aufgabe wird ebenso mit einem Verfahren zur Anlagenabnahme oder zur Produkt-qualitätskontrolle, das das erfindungsgemäße Prüfverfahren umfasst, gelöst.

Eine bevorzugte Ausführungsform der für das erfindungsgemäße Verfahren verwendeten Vorrichtung ist in der Zeichnung dargestellt. Es zeigen:
- Fig. 1: eine Schrägansicht der bevorzugten Ausführungsform; und
- Fig. 2: eine schematische Draufsicht auf die Vorrichtung bei der Vermessung eines etikettierten Behälters.

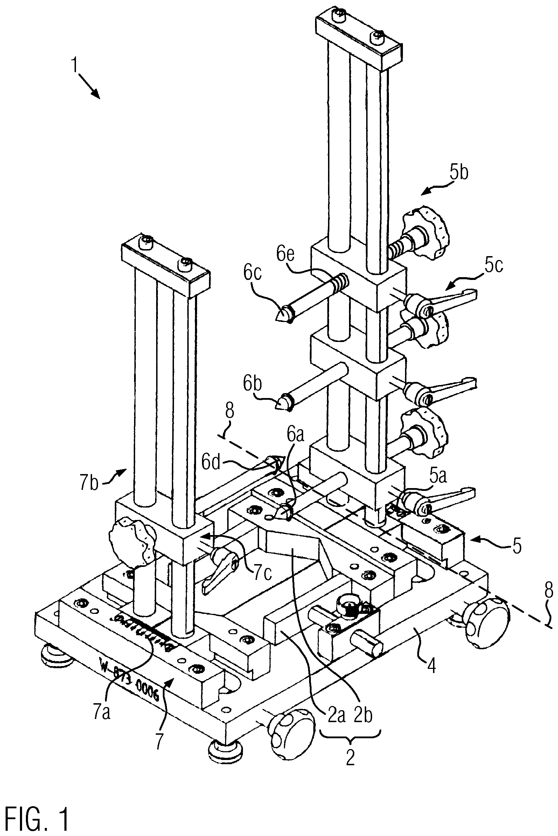

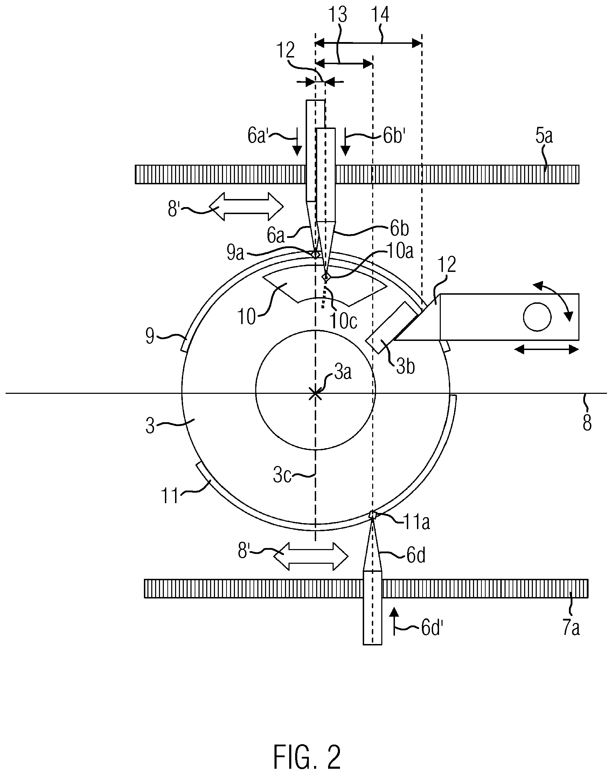

Wie die Fig. 1 erkennen lässt, umfasst eine bevorzugte Vorrichtung 1 eine Halterung 2 zum verdrehfesten Halten eines etikettierten Behälters 3, der in der Fig. 2 in der Draufsicht schematisch angedeutet ist. Zum verdrehfesten Halten des Behälters 3 sind beispielsweise fixierbare Spannbacken 2a und eine Behälterzentrierung 2b vorgesehen. Die Halterung 2 ist beispielsweise auf einer tragbaren Grundplatte 4 montiert.

Auf der Grundplatte 4 sind ferner eine erste Lineareinheit 5 mit justierbaren Prüfspitzen 6a bis 6c und ein zweite Lineareinheit 7 mit einer justierbaren Prüfspitze 6d montiert. Die Lineareinheiten 5, 7 sind vorzugsweise als separat verschiebbare Einheiten auf einander entgegen gesetzten Seiten der Halterung 2 ausgebildet. Prinzipiell wäre es jedoch auch denkbar, die Prüfspitzen 6a bis 6d auf einer gemeinsam verschiebbaren Lineareinheit zu montieren und/oder die Halterung 2 auf einer Lineareinheit (nicht gezeigt) verschiebbar auszubilden. Ebenso ist die Anzahl und Verteilung der Prüfspitzen 6a bis 6d lediglich beispielhaft.

An den Lineareinheiten 5, 7 ist eine Messeinrichtung vorzugsweise in Form von Messskalen 5a, 7a ausgebildet, mit der sich die Position der Prüfspitzen 6a bis 6d entlang einer in den Fig. 1 und 2 schematisch angedeuteten Messgeraden 8 ablesen lässt.

Statt dessen könnten auch geeignete Messpunkte an den Lineareinheiten 5, 7 vorgesehen sein, beispielsweise Vorsprünge, Einkerbungen oder dergleichen, an denen sich ein Messschieber oder dergleichen reproduzierbar ansetzen lässt, um die Position der Prüfspitzen 6a bis 6d zu messen. Entscheidend ist hierbei, dass eine Messeinrichtung vorgesehen ist, mit der sich die seitliche Relativposition der Prüfspitzen 6a bis 6d bezüglich der Halterung 2 bzw. eines darin gehaltenen etikettierten Behälters 3 entlang der Messgeraden 8 ermitteln lässt.

Die Prüfspitzen 6a bis 6d sind vorzugsweise mittels auf den Lineareinheiten 5, 7 montierter Stative 5b, 7b sowohl höhenverstellbar als auch in einer Richtung auf den zu vermessenden Behälter 3 hin verschiebbar oder schraubbar. Bezogen auf die Messgerade 8 lassen sich die Prüfspitzen 6a bis 6d somit in zwei orthogonalen Richtungen verstellen, im Beispiel der Fig. 1 nach oben bzw. unten und auf den Behälter 3 zu bzw. von diesem weg. Die Prüfspitzen 6a bis 6d lassen sich beispielsweise mit Hilfe eines lediglich für die obere Prüfspitze 6c schematisch angedeuteten Gewindes 6e durch Schrauben verstellen und in vertikaler Richtung entlang der Stative 5b, 7b verschieben. Die vertikale Position der Prüfspitzen 6a bis 6d lässt sich beispielsweise mit Hilfe von Klemmhebeln, Schrauben 5c, 7c oder dergleichen arretieren.

In der Fig. 2 ist die Funktionsweise der Vorrichtung 1 schematisch in der Draufsicht angedeutet. Demnach sind an dem Behälter 3 ein erstes Etikett 9 mit einem Aufdruckmerkmal 9a, ein zweites Etikett 10 mit einem Aufdruckmerkmal 10a und ein drittes Etikett 11 mit einem Aufdruckmerkmal 11 a angebracht. Wie das Beispiel der Fig. 2 erkennen lässt, ist das erste Etikett 9 beispielsweise ein Rumpfetikett, das zweite Etikett 10 ein Brustetikett und das dritte Etikett 11 ein Rückenetikett.

In der Fig. 2 sind beispielhaft nur drei der in der Fig. 1 gezeigten Prüfspitzen dargestellt, nämlich eine erste Prüfspitze 6a, die zur Lagevermessung des ersten Aufdruckmerkmals 9a gegen das erste Etikett 9 gefahren wird, eine zweite Prüfspitze 6b, die entsprechend gegen das zweite Aufdruckmerkmal 10a des zweiten Etiketts 10 gefahren wird, und eine dritte Prüfspitze 6d, die gegen das dritte Aufdruckmerkmal 11a auf dem dritten Etikett 11 gefahren wird. Ebenso wäre es denkbar, eine entsprechende Messung mit allen vier in der Fig. 1 dargestellten Prüfspitzen 6a bis 6d durchzuführen oder eine Messung mit lediglich zwei Prüfspitzen, beispielsweise mit den Prüfspitzen 6a und 6b oder mit den Prüfspitzen 6a und 6d.

In der Fig. 2 sind ferner die Hauptachse 3a des Behälters 3 angedeutet und eine Oberflächenkontur 3b, die auf der Oberfläche des Behälters 3 als Vorsprung und/oder Vertiefung ausgebildet ist, beispielsweise in Form einer Prägung. In der Fig. 2 ist ferner ein mechanischer Anschlag 12 angedeutet, der mit der Oberflächenkontur 3b des Behälters 3 zusammenwirkt, um die Drehlage des Behälters 3 um seine Hauptachse 3a für die nachfolgende Lagevermessung der Aufdruckmerkmale 9a bis 11a einzustellen. Zu diesem Zweck kann der Anschlag 12 schwenkbar und/oder verschiebbar ausgebildet sein, wie in der Fig. 2 durch entsprechende Doppelpfeile angedeutet ist. In entsprechender Weise kann der Anschlag 12 bei Formflaschen mit beispielsweise rechteckigem Querschnitt oder dergleichen dazu eingesetzt werden, die Drehlage des Behälters auszurichten, indem der Anschlag 12 beispielsweise flächig auf eine seitliche Oberfläche der Formflasche aufgesetzt wird (nicht dargestellt). In diesem Fall kann der Anschlag 12 seine Funktion auch ohne vertiefte oder erhabene Oberflächenkontur des jeweiligen Behälters erfüllen.

Die seitliche Relativposition der Aufdruckmerkmale 9a bis 11a auf den jeweiligen Etiketten 9 bis 11 ist bei den üblichen Druckverfahren mit ausreichender Reproduzierbarkeit konstant und kann daher für die Überprüfung der Etikettiergenauigkeit als bekannt vorausgesetzt werden. Vorzugsweise liegen die anvisierten Aufdruckmerkmale in der vertikalen Mittelachse oder Symmetrieachse des jeweiligen Etiketts, die der Übersichtlichkeit halber lediglich für das zweite Etikett 10 angedeutet ist und mit 10c bezeichnet ist. Dies ist allerdings nicht zwingend notwendig. Es ist prinzipiell ausreichend, wenn die jeweilige relative horizontale Position der Aufdruckmerkmale 9a bis 11a auf den Etiketten 9 bis 11 bekannt ist, beispielsweise die horizontalen Abstände von der jeweiligen Mittelachse.

Üblicherweise sind Etiketten eines Behälters in ihrer seitlichen Lage zueinander auszurichten, beispielsweise symmetrisch zu einer Referenzlinie 3c, um ein möglichst harmonisches Erscheinungsbild des jeweiligen Behälters zu erzielen. Die Lage der Referenzlinie 3c kann beispielsweise relativ zur Position der Oberflächenkontur 3b vorgegeben sein. Sind derartige Oberflächenkonturen auf dem Behälter 3 nicht vorgesehen, kann es ausreichend sein, lediglich die Ausrichtung der einzelnen Etiketten 9 bis 11 zueinander zu überprüfen.

Die Fig. 2 zeigt zur Verdeutlichung übertrieben dargestellt eine seitlich versetzte Ausrichtung des zweiten und dritten Etiketts 10, 11 gegenüber der Referenzlinie 3c und des ersten Etiketts 9. Durch Positionieren der Prüfspitzen 6a, 6b und 6d an oder auf den Aufdruckmerkmalen 9a, 10a und 11a lässt für jedes Etikett getrennt eine Ist-Position der jeweiligen Aufdruckmerkmale entlang der Messgeraden 8 messen.

Beispielsweise wird ein erster relativer seitlicher Versatz 12 zwischen dem ersten und zweiten Etikett 9, 10 und ein zweiter relativer seitlicher Versatz 13 zwischen dem ersten und dritten Etikett 9, 11 ermittelt. Ebenso lässt sich ein absoluter seitlicher Versatz 14 zwischen dem ersten Etikett 9, oder jedem anderen Etikett, und der Oberflächenkontur 3b ermitteln. Dazu werden die Ist-Werte des jeweiligen seitlichen Versatzes entlang der Messgeraden 8 gemessen, insbesondere aus den Ist-Positionen der jeweiligen Aufdruckmerkmale 9a bis 11a entlang der Messgeraden 8.

Die Positionierbewegungen 6a', 6b' und 6d' der Prüfspitzen 6a, 6b und 6d sind in der Fig. 2 schematisch angedeutet. Die Prüfspitzen werden an die jeweiligen Aufdruckmerkmale zumindest so nah herangefahren werden, dass sich die jeweiligen Ist-Positionen der Aufdruckmerkmale entlang der Messgeraden 8, beispielsweise mit Hilfe der Messskalen 5a, 7a messen lassen. Es wäre auch denkbar, die Etiketten 9 bis 11 mit den Prüfspitzen 6a, 6b, 6d anzustechen, um die Genauigkeit der Prüfspitzenpositionierung auf den jeweiligen Aufdruckmerkmalen 9a, 10a, 11a zu dokumentieren.

Mit der Vorrichtung 1 kann beispielsweise wie folgt gearbeitet werden.

Aus einer Produktcharge mit Behältern 3 werden unter normalen Produktionsbedingungen einem an sich bekannten Prüfschema folgend einzelne, beispielsweise mit den Etiketten 9 bis 11 ausgestattete Behälter 3 ausgeschleust. Die Behälter 3 werden jeweils einzeln in die Vorrichtung 1 gesetzt, mit Hilfe der Oberflächenkontur 3b bezüglich ihrer Drehlage an dem Anschlag 12 ausgerichtet und in der Halterung 2 mittels der Klemmbacken 2a, 2b fixiert. Danach werden die Aufdruckmerkmale 9a bis 11a nacheinander mit den jeweils zugeordneten Prüfspitzen 6a, 6b und 6d angefahren. Das Verschieben entlang der Messgeraden ist durch Doppelpfeile 8' angedeutet.

Die jeweiligen Messpositionen der Prüfspitzen 6a, 6b und 6d können beispielsweise auf den Messskalen 5a, 7a abgelesen werden. Ebenso ist es denkbar, einen Messschieber oder dergleichen zu verwenden und an der Ist-Position des ersten Aufdruckmerkmals 9a bzw. der zugehörigen Prüfspitze 6a eine Referenzposition für die beiden weiteren zu ermittelnden Messpositionen festzulegen, beispielsweise in Form eines Nullpunkts. Dies vereinfacht das Ablesen des relativen Versatzes 12 und 13.

Der jeweils im Beispiel ermittelte Versatz 12, 13 entlang der Messgeraden 8 wird für jeden zu untersuchenden Behälter 3 dokumentiert und vorzugsweise in eine Liste zur statistischen Auswertung übertragen. Es werden dann beispielsweise 100 gleichartig etikettierte Behälter 3 auf gleiche Weise vermessen und die auf diese Weise ermittelten Werte des seitlichen Versatzes 12, 13 nach den Gesetzmäßigkeiten der Gaußschen Normalverteilung ausgewertet.

Besonders vorteilhaft ist das Ermitteln der Standardabweichung, die als Prüfkriterium für die Abnahme einer zugehörigen Etikettierung bei der Erstinstallation oder für die regelmäßige Qualitätskontrolle bei der Produktion einzelner Produktchargen eingesetzt werden kann. Das Verwenden der Standardabweichung als Prüfkriterium ermöglicht im Gegensatz zu herkömmlichen Verfahren, bei denen absolute Fehleranteile an einer Stichprobenmenge als Kriterium verwendet werden, kleinere Stichproben. Mit Hilfe der Standardabweichung (σ₁-Wert) lässt sich bei einer bestimmten Stichprobengröße eine höhere Aussagekraft erzielen als mit herkömmlichen Auswerteverfahren. Zusätzlich kann beispielsweise ein aus der beschriebenen Auswertung ermittelter σ₃-Wert dazu verwendet werden, abzuschätzen, wie viele Behälter bei einer Produktion unter Normalbedingungen derart fehlerhaft etikettiert werden, dass sie aus dem Produktstrom ausgeschleust werden müssen.

Mit der Vorrichtung 1 und dem erfindungsgemäßen Verfahren lassen sich beispielsweise ab Stichprobengrößen von wenigstens 30 Behältern aussagekräftige Prüfresultate erzielen. Vorteilhaft sind Stichprobengrößen von wenigstens 100 gleichartig etikettierten Behältern. Besonders vorteilhaft sind Stichprobengrößen zwischen 100 und 300 Behältern. Diese werden vorzugsweise innerhalb einer gemeinsamen Produktionscharge aus dem Produktstrom entnommen. Üblicherweise sind Produktschwankungen innerhalb einer Produktcharge so gering, dass sie die Aussagekraft der Überprüfung der Etikettiergenauigkeit nicht nennenswert stören.

Durch die Vermessung von Aufdruckmerkmalen 9a bis 11a auf den Etiketten 9 bis 11 ist ein Umschlagen der Etiketten 9 bis 11 zum Ermitteln ihrer vertikalen Mittelachse entbehrlich. Ferner lässt sich das erfindungsgemäße Verfahren für unterschiedliche Etikettentypen einsetzen, beispielsweise auch für schwer ablösbare Selbstklebeetiketten. Somit lassen sich im Prinzip alle handelsüblichen Etiketten mit dem erfindungsgemäßen Verfahren auf gleiche Weise überprüfen. Dies vereinfacht die Handhabung der Überprüfung der Etikettiergenauigkeit ebenso wie die Standardisierung und Qualitätskontrolle der Produktion insgesamt.

In der praktischen Anwendung eignen sich beispielsweise folgende Werte der Standardabweichung (σ₁-Wert) für einen seitlichen Versatz gegenüber einer Oberflächenkontur 3c: ±1,5 mm für Rumpfetiketten; ±1,7 mm für Brustetiketten; und ±1,9 mm für Rückenetiketten. Bei Behältern mit zylindrischem Querschnitt ohne Oberflächenkonturen ist beispielsweise zwischen dem Rumpfetikett 9 und dem Brustetikett 10 ein Versatz 12 von ±1,0 mm zulässig, zwischen dem Rumpfetikett 9 und dem Rückenetikett ein Versatz 13 von ±1,5 mm. Bei Formflaschen, beispielsweise mit im Wesentlichen rechteckigem Querschnitt, wird eine Etikettiergenauigkeit entlang der Messgeraden 8 von beispielsweise ±0,8 mm gefordert.

Diese Werte lassen sich anhand der Druckmerkmale 9a, 10a, 11a mit ausreichender Genauigkeit überprüfen. Hierbei kann die Ungenauigkeit des Aufdrucks, also im Sinne einer unzureichenden Reproduzierbarkeit des Druckbildes, innerhalb einer Charge vernachlässigt werden.

Somit ermöglichen die Vorrichtung 1 und das entsprechende Verfahren eine universell für unterschiedliche Behälter und Etiketten anwendbare Qualitätskontrolle bei der Erstinstallation, Instandhaltung und bei der Produktion unter normalen Bedingungen. Mit Hilfe der beschriebenen statistischen Auswertung kann die Größe der erforderlichen Stichproben gegenüber bekannten Verfahren reduziert werden.

Die Vorrichtung 1 kann aufgrund ihrer kompakten, insbesondere tragbaren Ausführung problemlos transportiert werden und an unterschiedlichen Produktionsstätten reproduzierbar eingesetzt werden. Ebenso lässt sich die Anzahl der für einzelne Behälter erforderlichen Prüfspitzen 6a bis 6d auf einfache Weise an die jeweiligen Bedingungen anpassen. Hierbei sind die in den Figuren angedeuteten Prüfspitzen 6a bis 6d lediglich beispielhaft zu verstehen. Eine erfindungsgemäße Kontrolle der Etikettiergenauigkeit lässt sich mit wenigstens zwei der gezeigten Prüfspitzen durchführen. Hierbei ist eine Ausführungsform mit auf beiden Seiten der Behälter vorgesehenen Lineareinheiten und/oder Prüfspitzen für eine flexible Anwendung vorteilhaft, jedoch nicht zwingend notwendig.

## Patentansprüche

1. Verfahren zum Überprüfen der Etikettiergenauigkeit an Behältern (3), insbesondere Flaschen, mit den Schritten:
a) Halten der Behälter in einer vorgegebenen Drehlage;
b) Positionieren einer ersten Prüfspitze (6a) an einem ersten Aufdruckmerkmal (9a), das auf einem seitlich an den Behältern angebrachten ersten Etikett (9) vorhanden ist, durch Verschieben der ersten Prüfspitze oder des Behälters entlang einer senkrecht zur Hauptachse (3a) des Behälters verlaufenden Messgeraden (8), und Messen einer zugehörigen ersten Ist-Position entlang der Messgeraden;
c) Positionieren einer zweiten Prüfspitze (6b) an einem zweiten Aufdruckmerkmal (10a), das auf einem seitlich an den Behältern angebrachten zweiten Etikett (10) vorhanden ist, durch Verschieben der zweiten Prüfspitze oder des Behälters entlang der Messgeraden, und Messen einer zugehörigen zweiten Ist-Position entlang der Messgeraden; und
d) Ermitteln eines Positionsversatzes (12) zwischen der ersten und zweiten Ist-Position.

2. Verfahren nach Anspruch 1, mit einem vorangehenden Schritt des Ausrichtens der Drehlage der Behälter (3) durch Ansetzen einer an den Behältern vorhandenen Oberflächenkontur (3b), insbesondere einer Prägung oder Formflaschenkante, an einem mechanischen Anschlag (12).

3. Verfahren nach Anspruch 1 oder 2, wobei das erste Etikett (6a) ein Rumpfetikett und das zweite Etikett (6b, 6c) ein Brustetikett oder ein Rückenetikett ist.

4. Verfahren nach einem der Ansprüche 1 bis 3, wobei ferner eine dritte Prüfspitze (6d) an einem dritten Aufdruckmerkmal (11a), das auf einem seitlich an den Behältern (3) angebrachten dritten Etikett (11) vorhanden ist, durch Verschieben der dritten Prüfspitze oder des Behälters entlang der Messgeraden (8) positioniert wird, wobei ferner eine zugehörige dritte Ist-Position entlang der Messgeraden ermittelt wird, und wobei ferner ein Positionsversatz (13) zwischen der dritten Ist-Position und der ersten und/oder zweiten Ist-Position berechnet wird.

5. Verfahren nach Anspruch 4, wobei das zweite und dritte Etikett (10, 11) auf einander entgegen gesetzten Seiten des Behälters (3) angebracht sind.

6. Verfahren nach wenigstens einem der Ansprüche 1 bis 5, wobei der jeweilige Positionsversatz (12, 13, 14) für eine Stichprobe von wenigstens 30, insbesondere wenigstens 100, gleichartig etikettierten Behältern (3) statistisch auf der Grundlage einer Gaußschen Normalverteilung ausgewertet wird, und wobei insbesondere die die aus der Stichprobe ermittelte Standardabweichung (σ₁) mit einem Sollwert verglichen wird.

7. Verfahren nach wenigstens einem der Ansprüche 1 bis 6, wobei der jeweilige Positionsversatz (12, 13, 14) unter Normalproduktionsbedingungen innerhalb einer Produktcharge gemessen wird.

8. Verfahren zur Anlagenabnahme oder zur Produkt-Qualitätskontrolle, umfassend das Verfahren nach wenigstens einem der Ansprüche 1 bis 7.

## Claims

1. Method for checking the accuracy of labels on containers (3), particularly bottles, with the steps:
a) holding the containers in a predetermined rotational position,
b) positioning a first probe (6a) on a first imprint feature (9a) which is present on a first label (9) affixed laterally to the containers, by moving the first probe or the container along a straight measurement line (8) extending in a direction perpendicular to the main axis (3a) of the container, and measuring an associated first actual position along the straight measurement line;
c) positioning a second probe (6b) on a second imprint feature (10a) which is present on a second label (10) affixed laterally to the containers, by moving the second probe or the container along the straight measurement line, and measuring an associated second actual position along the straight measurement line; and
d) determining a position offset (12) between the first and second actual position.

2. Method according to claim 1, with a preceding step of aligning the rotational position of the container (3) by fixing a surface contour (3b) present on the containers, particularly an embossing or shaped bottle edge, on a mechanical stop (12).

3. Method according to claim 1 or 2, wherein the first label (6a) is a body label and the second label (6b, 6c) is a shoulder label or a back label.

4. Method according to any one of claims 1 to 3, wherein further a third probe (6d) is positioned on a third imprint feature (11a) which is present on a third label (11) affixed laterally to the containers (3), by moving the third probe or the container along the straight measurement line (8), wherein further an associated third actual position is determined along the straight measurement line, and wherein further a position offset (13) between the third actual position and the first and/or second actual position is calculated.

5. Method according to claim 4, wherein the second and third label (10, 11) are affixed to mutually opposite sides of the container (3).

6. Method according to at least one of claims 1 to 5, wherein the respective position offset (12, 13, 14) is statistically evaluated for a probe of at least 30, particularly at least 100, similarly labeled containers (3) on the basis of a Gaussian distribution, and wherein particularly the standard deviation (σ1) is compared with a set value.

7. Method according to at least one of claims 1 to 6, wherein the respective position offset (12, 13, 14) is measured under normal production conditions within a product batch.

8. Method for system acceptance or for product quality control, comprising the method according to at least one of claims 1 to 7.

## Revendications

1. Procédé de vérification de la précision d'étiquetage sur des contenants (3), notamment des bouteilles, comprenant les étapes suivantes :
a) maintien des contenants dans une position de rotation prédéterminée ;
b) positionnement d'un premier pointeau de vérification (6a) sur une première caractéristique d'impression (9a), qui est présente sur une première étiquette (9) appliquée latéralement sur les contenants, en faisant coulisser le premier pointeau de vérification ou le contenant le long d'une droite de mesure (8) s'étendant perpendiculairement à l'axe principal (3a) du contenant, et mesure d'une première position réelle associée, le long de la droite de mesure ;
c) positionnement d'un deuxième pointeau de vérification (6b) sur une deuxième caractéristique d'impression (10a), qui est présente sur une deuxième étiquette (10) appliquée latéralement sur les contenants, en faisant coulisser le deuxième pointeau de vérification ou le contenant le long de la droite de mesure, et mesure d'une deuxième position réelle associée, le long de la droite de mesure ; et
d) détermination d'un décalage de position (12) entre la première et la deuxième position réelle.

2. Procédé selon la revendication 1, comprenant une étape préalable d'orientation de la position de rotation des contenants (3), par l'application d'un contour de surface (3b), notamment un relief ou un bord de forme du contenant, existant sur les contenants, contre une butée mécanique (12).

3. Procédé selon la revendication 1 ou la revendication 2, d'après lequel la première étiquette (6a) est une étiquette de corps de bouteille, et la deuxième étiquette (6b, 6c) est une étiquette de col de bouteille ou une étiquette arrière.

4. Procédé selon l'une des revendications 1 à 3, d'après lequel on positionne, par ailleurs, un troisième pointeau de vérification (6d) sur une troisième caractéristique d'impression (11a), qui est présente sur une troisième étiquette (11) appliquée latéralement sur les contenants (3), en faisant coulisser le troisième pointeau de vérification ou le contenant le long de la droite de mesure, et on mesure une deuxième position réelle correspondante le long de la droite de mesure (8), d'après lequel on détermine par ailleurs une troisième position réelle associée sur la droite de mesure, et d'après lequel on calcule par ailleurs, un décalage de position (13) entre la troisième position réelle et la première et/ou la deuxième position réelle.

5. Procédé selon la revendication 4, d'après lequel la deuxième et la troisième étiquette (10, 11) sont appliquées sur des côtés mutuellement opposés du contenant (3).

6. Procédé selon l'une au moins des revendications 1 à 5, d'après lequel le décalage de position respectif (1, 13, 14) est analysé, pour un échantillon d'au moins 30, notamment d'au moins 100 contenants (3) étiquetés de façon similaire, de manière statistique sur la base d'une répartition normale de Gauss, et d'après lequel on compare notamment l'écart standard (σ₁), déterminé à partir de l'échantillon, avec une valeur de consigne.

7. Procédé selon l'une au moins des revendications 1 à 6, d'après lequel le décalage de position respectif (12, 13, 14) est mesuré dans des conditions de production normales à l'intérieur d'une charge de produits.

8. Procédé de réception d'installation ou destiné au contrôle-qualité des produits, comprenant le procédé selon l'une au moins des revendications 1 à 7.
